# EUROPÄISCHE PATENTSCHRIFT

(11) **EP 0 393 378 B1**
(45) Veröffentlichungstag und Bekanntmachung des Hinweises auf die Patenterteilung: **16.06.1993**
(21) Anmeldenummer: 90105532.7
(22) Anmeldetag: 23.03.1990
(51) Int. Cl.: C05F 17/02

(54) **Kompostieranlage und Kompostierverfahren**
Apparatus for composting and process therefor
Dispositif de compostage et procédé

(30) Priorität: 28.03.1989 CH 1119/89; 01.03.1990 CH 630/90
(43) Veröffentlichungstag der Anmeldung: 24.10.1990
(73) Patentinhaber: BÜHLER AG, 9240 Uzwil (CH)
(72) Erfinder: Weber, Heinrich, CH-9242 Oberuzwil (CH); Lehrmann, Falko, CH-9242 Oberuzwil (CH); Hofer, Hermann, CH-9244 Niederuzwil (CH); Vogel, Werner, A-6923 Lauterach (AT); Mueller, Peter, A-6830 Rankweil (AT)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 060 410
- EP-A- 0 244 391
- EP-A- 0 250 617
- CH-A- 421 159
- DE-A- 1 431 830
- DE-A- 2 302 882
- FR-A- 2 236 933

## Beschreibung

Die Erfindung betrifft eine Kompostieranlage zur Herstellung von Kompost verschiedenen Reifegrades, wie sie im Oberbegriff des Patentanspruchs 1 angegeben ist, sowie die Verwendung einer derartigen Kompostieranlage zur Kompostherstellung.

Die Kompostherstellung machte mehrere markante Entwicklungsphasen durch. Seit Beginn unseres Jahrhunderts ist die Kompostierung eine Lieblingsbeschäftigung der Gartenbesitzer. Diese bringen Garten- und Küchenabfälle als Wertstoffe wiederum zurück in den natürlichen Kreislauf. Aufbau sowie Umschichten der Kompostmieten erfolgen von Hand, wobei eine große Vielfalt an Methoden, Zutaten, Zeitabläufen usw. bis heute erarbeitet und empfholen wurden und werden.

Der Zwang zur Werterhaltung der kompostierbaren, von der Öffentlichkeit gesammelten sogenannten "Abfällen" zwang bald zu einer Mechanisierung für die großen, von Hand nicht mehr bewältigbaren Mengen an Kompost. Nach dem Krieg kam eine Tendenz auf, baumaschinenartige Geräte für die Herstellung und Umschichtung der Mieten einzusetzen, sogar in der Form der bekannten Schaufellader.

Da die Kompostreifung ein vorwiegend biologischer Vorgang ist, war mit der mechanischen Betrachtungsweise bzw. der entsprechenden Handhabung der Kompostmaterialien mit Schaufellader ein entsprechender Mißerfolg gleichsam "vorprogrammiert". Die erhaltenen Komposterden waren in der Mehrzahl derart inakzeptabel, daß sich vielerorts bis heute eine Ablehnung durch die Öffentlichkeit gegenüber der Kompostherstellung einstellte.

In der Folge strengte sich die Fachwelt für die Suche nach biologisch zweckmäßigeren Kompostbereitungen an. Um die Verfahrenskosten tief zu halten, wurden eine Vielfalt an stark forcierten biologischen Abbauprozessen entwickelt. Die vorgeschlagenen Bio-Reaktoren fanden jedoch nur geringe Verbreitung.

Die jüngste Vergangenheit ist gekennzeichnet durch zwei an sich analoge Lösungswege. Der eine, mehr für Kleinanlagen, benützt wiederum die altbekannten Dreiecksmieten. Diese werden mit Umsetzmaschinen umgeschichtet. Dabei wird jede unnötige Produktpressung vermieden, im Gegenteil wird das Produkt beim Umsetzen jedesmal frisch gelockert. Der große Vorteil dieser Methode liegt darin, daß der Kompostanlagewart in größerem Maßstab genau so gezielt den Rotteablauf beeinflussen kann, durch Wahl der Höhe der Mieten, Umschichtzyklus, Wasserzugabe, Vermischung mit verschiedenen Stoffen usw.

Dieser Vorteil ist aber gleichzeitig auch ein Hauptnachteil. Die optimale Rotteführung stellt hohe Anforderungen an die verantwortlichen und durchführenden Fachleute und setzt somit einen hohen Ausbildungsstand voraus. Die Arbeitsbedingungen im Umfeld der Verrottung sind bekanntlich unangenehm, besonders wegen Geruchtsbelästigung, so daß in den wenigsten Fällen die Personen, die die notwendigen beruflichen Voraussetzungen haben, auch bereit sind, diese Arbeit zu tun. Entweder müßte die Person über große praktische Begabung, wie z.B. ein erfahrener Gärtner, oder aber über hohe Biologie-Kenntnisse verfügen. Die Bestrebungen liegen zur Zeit darin, die Herstellung von Kompost biologisch richtig, aber doch weitgehend mechanisiert durchzuführen. Beanstandet wird, daß die entsprechenden mechanischen Lösungen z.B. gemäß der EP-PS 250 617 den biologischen Abläufen nocht nicht genügend Rechnung tragen. Der biologische Prozess während der Hauptverrottung ergibt eine Volumenreduktion von bis zu 50 % innerhalb weniger Wochen.

Besonders wenn die Anlagen im Nahbereich menschlicher Siedlungen angeordnet sind, muß Geruchsemission vermieden werden. Dies verlangt eine vollständige Einhausung der Kompostieranlage sowie Reinigung der Abluft. Für eine bessere Kontrolle des biologischen Abbaus ist es oft vorteilhaft, zusätzlich das Rottesystem zu durchlüften, so daß solche Anlagen verhältnismäßig große Investitionen erfordern. Wird im ersten Bereich der Rotte die Primärmiete z.B. auf eine Höhe von 2,5 m aufgeschichtet, ergibt der Rotteschwund bei Kompostreife noch eine Mietenhöhe von 1,25 m. Der teuer umbaute Raum wird auf diese Weise schlecht genutzt. Diese Art von mechanisiertem Betrieb weist somit wiederum Nachteile auf gegenüber dem vorgenannten Maschinen-Umschichten durch den Anlagenwart.

Bei einer bekannten Kompostieranlage der eingangs genannten Art (FR-A-2 236 933) ist über einem Rotteplatz eine kranartig längs verfahrbare Umschichteinheit vorgesehen, die einen Endlosförderer aufweist, der als aufwärts arbeitendes Abbaumittel für das auf dem Rotteplatz als Tafelmiete lagernde Material dient. Die Umschichteinheit besitzt ein quer zur Förderrichtung des Endlosförderers und quer zur Längsrichtung des Rotteplatzes angeordnetes Förderband auf, welches das von dem als Abbaueinrichtung dienenden Endlosförderer angelieferte Material zu einem seitlich in Längsrichtung parallel neben dem Rotteplatz angeordneten Bandförderer führt.

Der Bandförderer transportiert das umzuschichtende Material zu einem weiteren Querförderband, das ebenfalls in Längsrichtung über den Rotteplatz verschiebbar ist, und jeweils an der entsprechenden Abwurfstelle angeordnet ist. Um eine Abstandsänderung zwischen der Abbau- und der Abwurfstelle auszugleichen, weist der neben dem Rotteplatz angeordnete Bandförderer eine Bandschleife auf, mittels der der Transportweg vom quer angeordneten Förderband der Umschichteinheit zum weiteren Querförderer an den sich ändernden bestand zwischen der Abbau- und der Abwurfstelle angepaßt werden kann.

Zwar läßt sich bei dieser bekannten Kompostieranlage der Rotteschwund kompensieren, hierfür ist jedoch ein erheblicher apparativer Aufwand erforderlich.

Bei einer anderen bekannten Kompostieranlage (EP-A-0 060 410) ist eine Maschine zum Umsetzen von zu kompostierenden Material auf einem Rotteplatz vorgesehen, die in Längs- und Querrichtung über dem Rotteplatz verfahrbar ist.

Diese bekannte Maschine zum Umsetzen weist ein Schaufelrad sowie ein verschieb- und verschwenkbares Absetz-Transportband auf. Zum Umsetzen des auf dem Rotteplatz lagernden Materials wird dieses vom Schaufelrad aufgenommen und zum Absetz-Transportband gefördert, welches das Material zur Abwurfstelle transportiert.

Der Erfindung liegt demgegenüber die Aufgabe zugrunde, eine weitere Kompostieranlage der eingangs genannten Art zu schaffen, die es auf einfache Weise ermöglicht, daß die Abbau- und die Abwurfstelle in einem erforderlichen Spielraum frei wählbar sind.

Diese Aufgabe wird erfindungsgemäß bei einer Kompostieranlage der eingangs genannten Art durch die kennzeichnenden Merkmale des Anspruchs 1 gelöst.

Durch die erfindungsgemäß vorgesehenen, sich mehr oder weniger teleskopartig überlappenden Förderer, von denen wenigstens einer zur Änderung des Überlappungsgrades längs verschiebbar ist, wird erreicht, daß die Umschichtung der Rotte nach einem vorgebbaren Schema steuerbar ist, insbesondere so, daß der Rotteschwund automatisch ausgleichbar ist, also die zusammengesackte "Altmiete" zu einer Höhe wie bei Beginn wieder aufgeschichtet werden kann, ohne daß aufwendige und lange Förderer vorgesehen werden müssen.

Bei der Ausgestaltung der Erfindung nach Anspruch 2 können jahreszeitlich und produktbedingte optimale Programme jederzeit wiederholt werden. Auf diese Weise kann eine laufende Verbesserung der Kontrolle des Reifeprozesses erreicht werden. Je nach Durchsatzleistung durch die Rotte, Jahreszeitproduktfeuchtigkeit, oder Temperatur usw. kann ein bestimmtes Grundprogramm eingegeben und im Betrieb laufend den momentanen Gegebenheiten angepaßt werden. Zum Beispiel kann der zeitliche Ablauf korrigiert, die Zuluft- oder Bewässerungsmengen optimiert oder, bei sehr großem Anfall an Rohgut, die maximale Höhe voll ausgenutzt werden. Entsprechende Programme lassen sich so auslegen, daß die Rotte eine Pufferwirkung haben kann für die Schwankungen zwischen Anliefermenge und Ausliefermenge, wobei jederzeit der Ablauf durch einen Direkteingriff in die Programmierung durch den Anlagenwart beeinflußbar ist.

So wird durch die Längsverschiebbarkeit des Fördersystems eine Umsetzweite zwischen der Abbau- und Abwurfstelle innerhalb von L min und L max gewählt, wobei das Verhältnis L min : L max 1 : 1,2 bis 1 : 3, bevorzugt 1 : 1,5 bis 1 : 2,5, ganz besonders bevorzugt etwa 1 : 2 beträgt.

Damit läßt sich in den allermeisten Fällen der Rotteschwund vollständig kompensieren, und zwar dadurch, daß das Rottegut von weit hergeholt und dann wieder höher aufgeschichtet wird.

Eine besonders vorteilhafte praktische Ausgestaltung der Erfindung ist in Anspruch 4 beschrieben.

Nach Anspruch 5 können die Förderer, insbesondere der erste, der das Rottegut von den Abbaumitteln übernimmt, geneigt sein. Wesentlich ist, daß wenigstens bei einem Förderer der Abwurf unabhängig von der Abbaustelle horizontal verschiebbar ist. Aus energetischen wie praktischen Erwägungen soll jede unnötige Höhenförderung und bei der Abwurfstelle jede unnötige Fallhöhe vermieden werden. Generell erfolgt der Abbau von unten nach oben und die Erstellung der Folgemiete von oben.

Eine andere Ausführungsform der Erfindung ist in Anspruch 6 beschrieben.

Die Rotten-Abbaueinrichtung kann als aufwärts fördernder Kratzförderer ausgebildet sein. Bei diesem Ausführungsgedanken können alle Horizontalförderer wirklich in einer horizontalen Lage eingebaut werden, was für die Verschiebbarkeit konstruktiv einfacher ist.

Besonders bevorzugt ist es, wenn die Rotten-Abbaueinrichtung als Becherförderer, insbesondere als nach aufwärts arbeitende Grab- und Förderräder ausgebildet ist. Zur Zeit wird darin die Optimalform für Grünabfälle, Haushaltskompost und Laubmaterial gesehen, dabei wird die Rottenabbaueinrichtung bevorzugt als Doppelgrab- und Förderrad ausgebildet. Ein Kratzförderer eignet sich dagegen besser, wenn stark pflanzliche zum Zusammenhängen neigende Güter verarbeitet werden müssen.

Bei einer weiteren Ausgestaltung der Erfindung ist im Bereich der Horizonalförderer ein Durchlaufwägesystem für das Rottegut vorgesehen, wobei dieses vorteilhafter Weise als Bandwaage ausgebildet ist. Die Bandwaage kann bei einem Horizontalförderer integriert werden.

Vorteilhaft ist es, wenn eine Wassergehaltsmeßeinrichtung sowie eine Flüssigkeitszuführeinrichtung zur kontinuierlich gesteuerten Zugabe von Flüssigkeit, bevorzugt Wasser, zugeordnet ist. Die Flüssigkeitszugabe erfolgt dabei zweckmäßig im Bereich der Abwurfstelle. Hierfür ist das Ausführungsbeispiel nach Anspruch 14 vorgesehen.

Das Wägesystem, das neben der Wassergehaltsmeßeinrichtung zur Feuchtigkeitsmessung als Hauptelement der Sensorik für eine genaue Wasserzugabe dient, hat gleichzeitig mehrere große Vorteile. Es unterstützt ferner die automatische Überwachung der Anlage, da diese normalerweise ohne Bedienungspersonal betreibbar ist. Durch Messung der Stromaufnahme für die Abbaueinrichtung läßt sich zusammen mit der jeweiligen Umschichtleistung die Umschichtung kontrollieren.

Die weitere Ausführungsform nach Anspruch 15 ermöglicht es in vorteilhafter Weise die Erfindung nicht nur beim Umschichten, sondern genauso beim Austrag aus der Rotteanlage zu benutzen.

Eine weitere vorteilhafte Ausgestaltung der Erfindung ist im Anspruch 16 beschrieben.

Zur gezielten Steuerung der Belüftung der Rotteanlage ist die Ausführungsform nach Anspruch 17 vorgesehen. Hierbei werden also insbesondere einzeln steuerbare Belüftungsfelder geschaffen.

Die ganze Rotte kann also vollständig mit automatischen Mitteln unter Kontrolle gehalten werden. Der menschliche Einsatz im Innern einer eingehausten Rotteanlage ist nur sporadisch, bei Störungen zur Prüfung und für allfällige Korrekturen notwendig. Der Anlagewart kann jederzeit nach seiner Beurteilung eingreifen. Auch wissenschaftliche Erkenntnisse können jederzeit zur periodischen Verbesserung der Basisprogrammierung genutzt werden.

Die erfindungsgemäße Kompostieranlage läßt sich zur automatischen Herstellung von Kompost einsetzen, wobei die Umschichtung und der Austrag des Kompostes kranartig über dem Rotteplatz erfolgt, und wobei die Abbau- und die Abwurfstelle über dem Rotteplatz sowohl in Quer- wie in Längsrichtung programmierbar sind, so daß der Rottezyklus nach Durchsatzleistung und Rottezeit optimiert und der Rottschwund sukzessive kompensiert werden kann, so daß der ganze Vorgang vollautomatisch steuerbar ist.

Besonders bevorzugt wird der Rottenaufbau bzw. die Primärmiete ebenfalls gesteuert, dies erfolgt jedoch durch unabhängige mechanische Mittel.

Weitere Einzelheiten der Erfindung ergeben sich anhand der in den nachfolgenden Figuren dargestellten Ausführungsbeispielen. Es zeigen:
- Die Fig. 1: die Seitenansicht einer Umschichteinheit
- Die Fig. 2: ein zweites Ausführungsbeispiel des Umschichtmobils im Einsatz im mittleren Bereich einer Tafelmiete, im Längsschnitt.
- Die Fig. 3: das Umschichtmobil der Fig. 2 in grösserem Massstab
- Die Fig. 4: ein Grundriss der Fig. 3
- Die Fig. 5,6,7: zeigen verschiedene Stufen bei dem Umschichten einer Kompostrotte
- Die Fig. 8: zeigt eine Kompostanlage mit zwei nebeneinanderliegenden Rotten
- Die Fig. 9: zeigt einen Schnitt IX - IX der Fig. 8 jedoch mit drei überdachten Tafelmieten

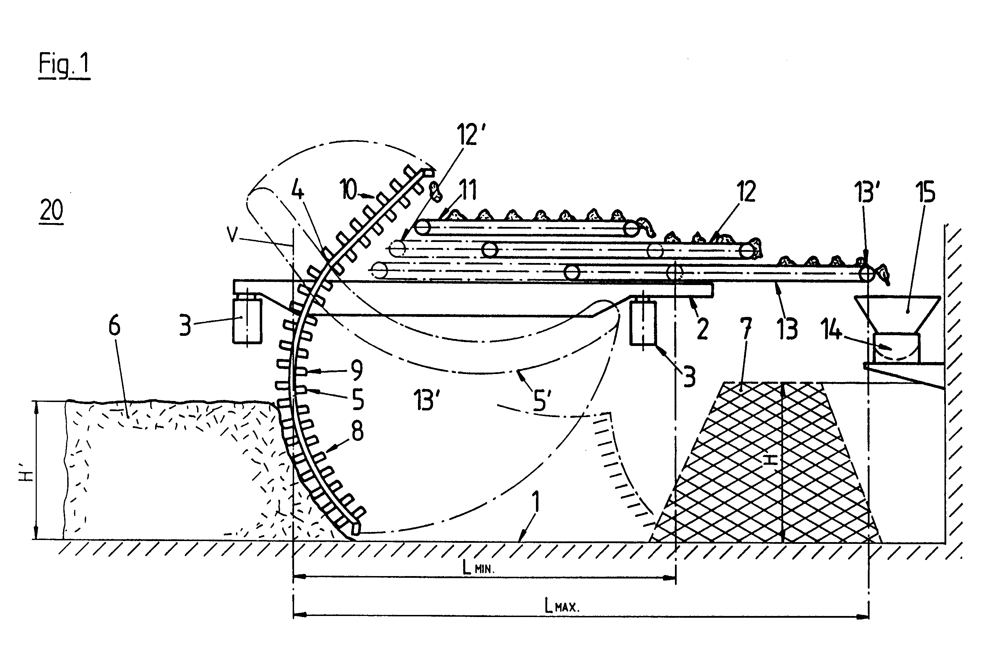

Gemäss Fig. 1 ist über einem Rotteplatz 1 eine Ladebrücke 2 auf einer senkrecht zur Zeichenebene verlaufenden Hauptbrücke 3 verfahrbar. Die längsverfahrbare Ladebrücke 2 dient als Führungseinrichtung für einen an ihr (in nicht dargestellter Weise) verfahrbaren und zweckmässig um eine Achse 4 schwenkbaren Becherförderer 5.

In jedem Falle wird die Tafelmiete 6 nach einiger Zeit soweit gereift sein, dass ein Umlagern und eventuell ein zusätzliches Befeuchten notwendig wird, um den Rottevorgang positiv zu unterstützen. Zu diesem Zwecke weist der Becherförderer 5 einen aufwärtsfördernden, schrägen Kratzerabschnitt 8 auf, wobei der Förderer 5 als Becherkratzer arbeitet. Der Förderer 5 weist einen Umlenkbereich 9 auf, wobei die Neigung der Abschnitte 8 und 10 so gewählt sind, dass das Fördergut im wesentlichen in den Bechern nach oben gefördert, in den Bereich der oberen Umlenkung ausgeworfen bzw. entladen und auf einen weiteren, als Bandförderer ausgebildeten Förderer 11 übergeben wird.

Der Bandförderer 11 ist in nicht dargestellter Weise an der Ladebrücke 2 gelagert und mit dieser verfahrbar. Zweckmässig ist aber noch mindestens ein weiterer Bandförderer 12 vorgesehen, der aus der mit vollen Linien dargestellten Arbeitslage in mindestens eine strich-punktiert dargestellte Ruhelage 12' teleskopartig verschiebbar ist. Bei der in Fig. 1 dargestellten Anordnung ist sogar noch ein dritter Bandförderer 13 veranschaulicht, der teleskopartig in eine Ruhelage (strichliert) verschiebbar ist. Diese Anordnung erlaubt es, die neue Aufschüttung 7 bzw. Miete mit Höhenkorrektur, wie weiter unten beschrieben, aufzuschütten, wobei die Bandförderer 12 bzw. 13 lediglich über die Differenz Lmax minus Lmin beweglich sein müssen.

Es ist bekannt, dass sich das Mietenvolumen im Laufe der Kompostreifung erheblich verringert. Beträgt z.Bsp. das Ausgangsvolumen von Grün- und Biomüll 100% vor der Rotte, so beträgt das Volumen des reifen Kompostesnach ca. 10 bis 12 Wochen Rotte - noch ca. 40% - 60%.

Ohne Ausgleich des Rotteschwundes würde sich bei konstanter Rottefläche die Höhe der Tafelmiete wie folgt reduzieren (etwa 7% Rotteschwund zwischen jeder Umschichtung):
- Tafelberghöhe der Primärmiete sei = 3,00 m
- nach ca. 10 Tagen (1. Umschichtung) =2,75 m
- nach ca. 20 Tagen (2. Umschichtung) =2,50 m
-
- nach ca. 70 Tagen (7. Umschichtung) =1,50m

Das System nach der vorliegenden Erfindung hat nun den positiven Effekt, dass bei veränderlichem Volumen die Höhe H konstant gehalten und dadurch erheblich an-Platzfläche gespart werden kann.

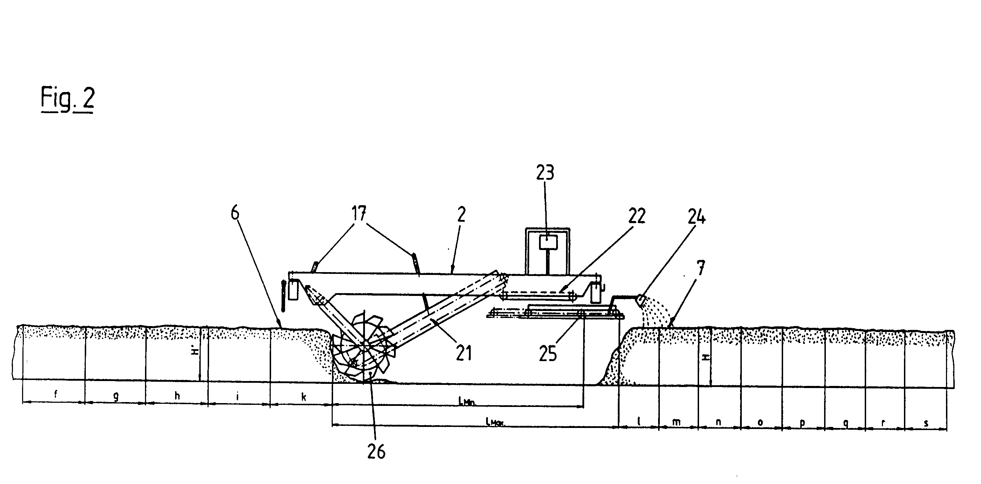

Wie nun in der Figur 2 etwas übertrieben dargestellt ist, wird mit der neuen Erfindung die jeweilige Altmiete 6 auf eine Höhe wie bei Beginn der Reifung zu einer neuen Aufschüttung 7 aufgeschichtet. Durch die teleskopartige Verschiebung der Bänder kann erreicht werden, dass die Höhendifferenz des Tafelberges H zu H' = ca. 7% wieder ausgeglichen wird, d.h. der Tafelberg wird bei jeder Umschichtung wiederum auf 3 m Höhe gebracht. Daraus errechnet sich eine totale Tafelberglänge bei konstanter Breite von nur noch 75%, d.h. die benötigte Platzfläche ist nur noch 75%, gegenüber einer Rottenanlage ohne Rottenschwundausgleich.

Beträgt zum Beispiel die Länge der Tafelmiete 100 m und wird ein Rotteschwund von 7 % innerhalb der Zeit von einem zum nächsten Umschichten angenommen, so wird die Tafelmiete beim Umschichten um 7 m verkürzt und zusätzlich in der Weise um 7 m in Richtung Austrag versetzt, dass die austragsseitigen 7 m über das Austragsband 14 ausgetragen werden, die Tafelmiete nach dem Umschichten aber noch eine Länge von 86 m aufweist und somit im Eintragsbereicht eine neue, 14 m lange Primärmiete eingebracht werden kann. Bei Annahme einer minimalen Arbeitsdistanz vom Abbau bis zum Abwurf von 7 m ergibt sich eine maximale Arbeitsdistanz von 14 m, also ein Verhältnis von 1 : 2.

Um einen automatisierten Ablauf der Kompostieranlage zu erhalten, ist es ferner vorteilhaft, wenn das Produkt am Ende der Rotte automatisch aus einer Rottehalle 20 ausgetragen werden kann.

In der Figur 1 ist der ausgereifte Kompost (die Aufschüttung 7) symbolisch als Trapezmiete dargestellt. Ein wesentlicher Vorteil der Erfindung liegt darin, dass der fertig ausgereifte Kompost nicht mehr auf dem Rotteplatz 1 aufgeschüttet, sondern für die weitere Aufbereitung z. Bsp. Feinsiebung usw. ausgetragen wird. Zu diesem Zweck ist am Ende des Rotteplatzes 1 ein stationäres Austragband 14 angeordnet. Die Teleskopierbarkeit des längsveränderbaren Fördersystems, Bandförderer 11, 12 und 13 werden hier in einer Weise gesteuert, dass das Austragband 14 mit seinem äusseren Abwurfende 13' stationär über einer Längsgosse 15 quer verfahrbar ist. Die dargestellte Position in Fig. 1 stellt das Ende der Produktaustragphase dar. Dies bedeutet, dass die Längenveränderung Lmax minus Lmin hier ausgenutzt wurde, um mit dem Förderer 5 von immer grösserer Distanz den reifen Kompost herzuholen, bei konstantem Abwurfort bezüglich der Rottelänge. Der Förderer 5 vollzieht eine volle Querbewegung und wird "Schrittweise" durch einen Schritt tiefer in die Miete die nächste Querbewegung ausführen. Die Distanzkorrektur kann ebenfalls schrittweise erfolgen.

Der Becherförderer 5 ist heb- und absenkbar, was auch wichtig ist. Um den Förderer 5 über den aufgeschütteten Tafelberg hinwegtransportieren zu können, ist es vorteilhaft, wenn der Förderer 5 aus der mit vollen Linien dargestellten Arbeitslage in die strich-strichpunktierte aufgezogene Lage 5' bewegbar ist. Es könnte sich an sich dabei um eine translatorische Bewegung handeln, doch ist eine Schwenkbewegung um die Achse 4 leichter zu führen und konstruktiv günstiger. Die Ausbildung kann dabei entsprechend der Fig. 2 getroffen sein, wobei die längsverfahrbare Ladebrücke 2 mit mindestens einer Kolben-Zylinder-Einheit 17 versehen ist, über die die Schwenkbewegung um die Achse 4 bewerkstelligbar ist.

In der Fig. 2 ist eine weitere Ausführungsform der Umschichteinheit dargestellt. Ein Überhebeband 21 gibt das Gut direkt an einen Horizontalförderer, der als Bandwaage 22 ausgebildet ist. Durch die Bandwaage 22 wird das Gut kontinuierlich verwogen. Die kontinuierliche Verwiegung hat zwei besondere Vorteile. Einerseits kann zusammen mit einer Messeinrichtung für den Wassergehalt des Kompostes eine fehlende Wassermenge errechnet und über eine Befeuchtungseinrichtung 24 unmittelbar in dem Bereich der Abwurfstelle das fehlende Wasser in jeder gewünschten Art, sei es als Wasser, Sickerwasser oder Klärschlamm, je nach Kompostreife zugegeben werden. Die Längsveränderbarkeit erfolgt hier mit einem längsverfahrbaren Reversierförderband 25. Da das Reversierförderband 25 beidseits abwerfen kann, kann die Wegstrecke für die Längsverfahrbarkeit reduziert, und trotzdem die volle Längsveränderbarkeit erzielt werden. Die Wasserzugabe ist an den beidseitigen Abwurfpunkten des Reversierförderbandes 25 möglich.

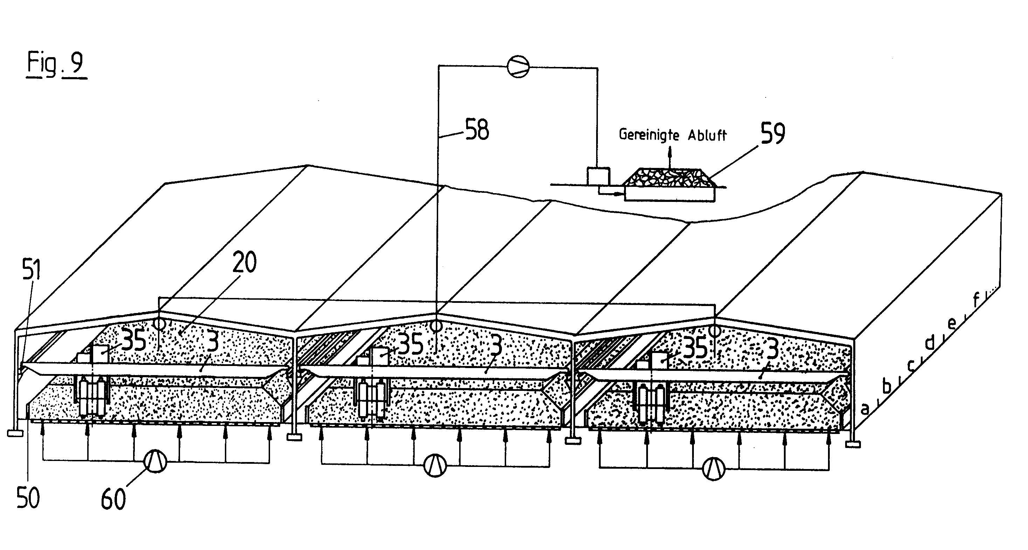

Die Abbaumittel sind hier als aufwärts arbeitende Grab- und Förderräder 26 ausgebildet. Die Arbeitsweise der Grab- und Förderräder 26 ist im wesentlichen identisch zu der Funktionsweise des Becherförderers 5 der Fig. 1. Bei einfach umzuschichtenden Gütern wie Hauskompost kann mit den Grab- und Förderrädern 26 eine höhere Umschichtleistung erzielt werden. Die Fig. 2 zeigt die Umschichteinheit im mittleren Bereich bezüglich der Länge einer Rottenfläche, wobei deutlich der Ausgleich des Rottenschwundes von H' zu H dargestellt ist. Die Tafelmiete wird nach der Umschichtung wieder auf Maximalhöhe gebracht. Die Alt- und die Neumiete sind mit Feldern (alt:) f, g, ... k, (neu:) 1, m, ... s, eingeteilt. Damit sollen auch im Hinblick auf die Wasserzugabe und allenfalls Luftzuführung von dem Rotteboden (Fig. 9) alle notwendigen Parameter abschnittsweise soweit sinnvoll steuerbar sein und wobei mehrere Felder für die Luftführung zusammen gefasst sein können.

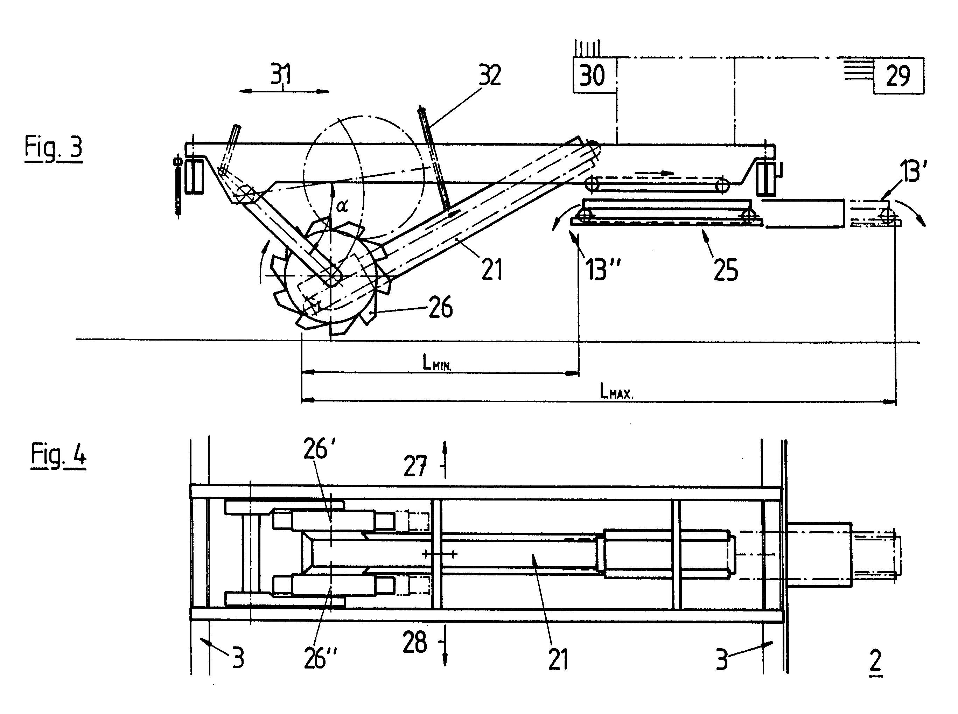

Wie aus den Figuren 3 und 4 erkennbar ist, ist die Abbaueinrichtung als Doppelgrab- und Förderrad 26' und 26'' ausgebildet, wobei die beiden Förderräder 26', 26'' beidseitig an dem Überhebeband 21 angeordnet sind, und auf diesem hin das Gut abwerfen. Die Grab- und Förderräder 26 überheben mit ihrem aufwärts arbeitenden Schaufeln das Gut zur Hälfte, den Rest der Überhebearbeit wird durch das Überhebeband 21 gemacht. Die Ladebrücke 2 ist in Querrichtung Pfeile 27 und 28 auf der Hauptbrücke 3 verfahrbar. Die ganze Umschichteinheit inklusiv das längsveränderbare Fördersystem ist als ein über einem Zentralrechner 29 fernsteuerbares Umschichtmobil nach Bedarf des Abbaues in Längsrichtung, Pfeil 31, verfahrbar. Wichtig ist dabei, dass alle wesentlichen Steuerbefehle nicht nur über Programme, welche in dem Zentralrechner 29 speicherbar sind, durchgeführt werden können, sondern genau so vor Ort über ein Vorortsteuergerät 30 eingegeben werden können.

Damit lassen sich über eine gewisse Zeitperiode Grundprogramme vor Ort durch den Anlagewart erstellen und gleichzeitig in dem Zentralrechner 29 ablegen. So können spezifische Eigenheiten ebenso wie zyklische Änderungen wie die Jahreszeiten empirisch ermittelt und über das Programm abgelegt und jederzeit wieder abgerufen werden. Genauso gut kann jedoch der ganze Ablauf aus welchen Gründen auch immer vor Ort durch den Anlagewart direkt gesteuert werden. Die Doppelgrab- und Förderräder 26 können zusammen mit dem Überhebeband 21 über einen Winkel α mit einer Rottenabbau-Hebe- und Senkvorrichtung 32 angehoben und auf den Boden, in besonderen Fällen auf jede gewünschte Arbeitshöhe abgesenkt werden.

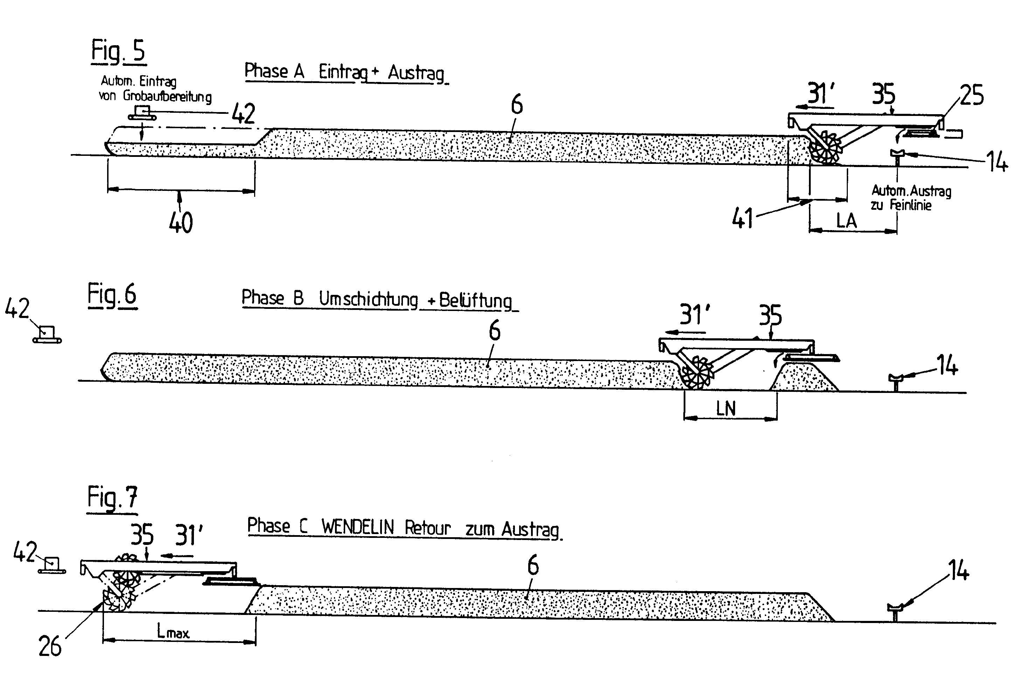

In den Figuren 5, 6 und 7 sind drei verschiedene Arbeitsphasen schematisch dargestellt. In der Figur 5 (Phase A) wird die Primärmiete 40 auf der linken Bildseite durch ein Eintragband 42 erstellt. Dies kann z.Bsp. über einen Zeitraum von 2 Tagen erfolgen. Von sehr grossem Vorteil ist die völlige Unabhängigkeit von dem Umschichtmobil 35, da beide in der Regel einen völlig anderen Arbeitsrhythmus haben. Auf der anderen Endseite der Tafelmiete 6 ist das Umschichtmobil 35 in der Arbeitsstellung für den automatischen Austrag auf das stationäre Austragband 14, von wo das reife kompostgut zu einer Feinaufbereitungslinie gefördert wird. Ausgetragen wird dabei nur die Endmiete 41. Der Ort für die Abwurfstelle bleibt hier konstant über dem Austragband 14, dagegen bewegt sich das Umschichtmobil 35 gemäss Pfeil 31 in Richtung auf die Tafelmiete 6. Gleichzeitig verschiebt sich das Abwurfband 25 relativ zu dem Umschichtmobil 35, sodass die Arbeitsdistanz LA von der Abbaustelle bis zur Abwurfstelle nach Massgabe des Abbaufortschrittes vergrössert wird.

Die Fig. 6 zeigt die eigentliche Umschichtung in der ersten Phase (B). Dabei weist das Umschichtmobil 35 eine Stellung LN auf, die als Normalarbeitsphase bezeichnet werden kann. Je nachdem kann der Abwurf nach innen erfolgen, wie in der Fig. 6 gleich zu Beginn, und dann nach aussen wechseln. Es ist möglich die Wasserzugabe in beiden Abwurfrichtungen vorzusehen. Das Umschichtmobil 35 bewegt sich in Richtung Pfeil 31'.

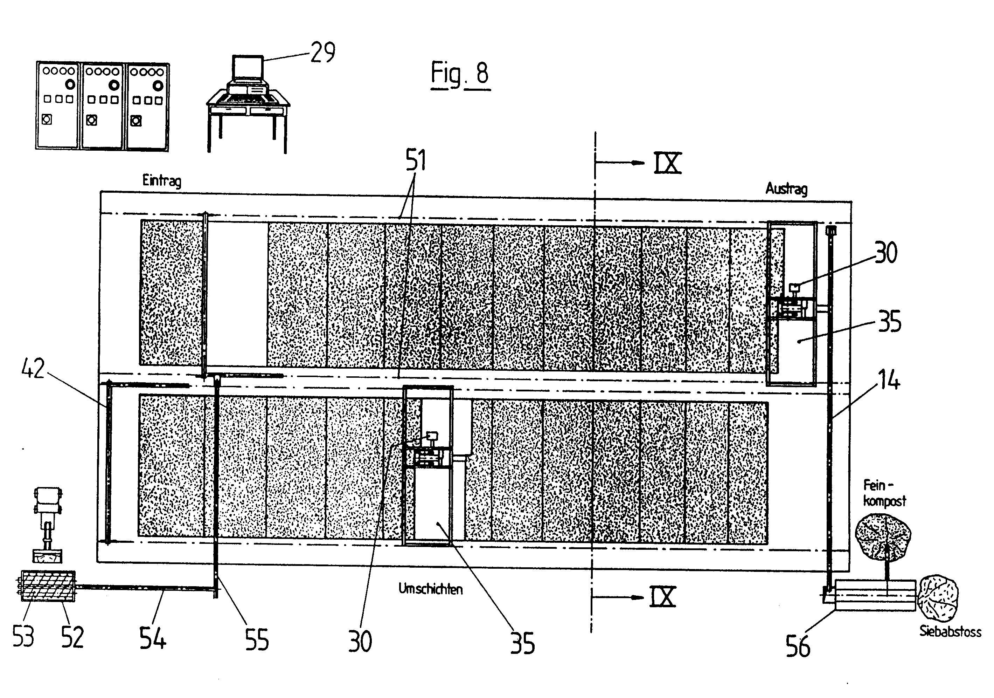

Die Figur 7 zeigt das Ende der Umschichtung, bzw. den Beginn der Retourbewegung des Umschichtmobiles 35. Die Grab- und Förderräder 26 sind auf die höchste Position angehoben und das Umschichtmobil 35 bewegt sich nach rechts Pfeil 31' , fährt über die Tafelmiete 6 hinweg zurück, in eine Position wie in der Fig. 5 und beginnt von vorne.

Die Figur 8 stellt schematisch einen Ausschnitt aus einer grösseren Kompostanlage dar, mit zwei nebeneinander liegenden Tafelmieten. Selbstverständlich können eine beliebige Anzahl Tafelmieten aneinander gereiht werden. Bevorzugt können z. Bsp. fünf Mieten zu einer grösseren automatischen Kompostieranlage zusammengefasst werden. Dabei lässt sich für die Umschichtung ein aktiver Wochenrhythmus von 5 Tagen einhalten und stets wenigstens von einer Miete der reife Kompost austragen.

Jede Tafelmiete ist mit zwei Längswänden 50 seitlich begrenzt. Die Längswände 50 sind mit einer Kranbahn 51 (siehe auch Fig. 9) ausgerüstet, auf welcher das Umschichtmobil 35 längsverfahrbar angeordnet ist. Der rohe Kompost wird in eine Annahmegosse 52 gekippt, welche in dem unteren Austrittsbereich ein Schneckenmahlaggregat 53 aufweist. Das grob zerkleinerte Gut wird durch einen Überhebeförderer 54 einem Verteilband 55 übergeben, welches das jeweilige im Einsatz befindliche Eintragband 42 speist. Das Austragband 14 übergibt den reifen Kompost einer Feinlinie 56, in welcher das Kompostmaterial für den jeweiligen Anwendungszweck gesiebt, von störenden Fremdstoffen befreit, und z. Bsp. in Säcken verpackt ausgeliefert wird. In besonderen Anwendungsfällen kann das Kompostmaterial in einem Zwischenreifegrad dem entsprechenden Anwender abgeliefert werden. Damit die Anlage vollautomatisch betreibbar ist, ist für die Koordination aller Steuerbefehle ein zentraler Rechner 29, sowie jedem Umschichtmobil 35 eine Vorortelektronik 30 zugeordnet. In günstigen Fällen ist auf diese Weise die ganze Kompostanlage vollautomatisch betreibbar, trotzdem kann der Anlagewart an jeder Stelle eingreifen und Korrekturen für den Arbeitsablauf bzw. Optimierungen dafür anbringen. Im Falle eines Ausfalles der Steuerung wird diese so konzipiert, dass jede sinnvolle Arbeitseinheit insbesondere das Umschichtmobil 35 mit der eigenen Vorortelektronik 30 jederzeit unabhängig von dem zentralen Rechner 29 steuerbar ist.

In der Fig. 9, sind drei vollständig überdachte Tafelmieten dargestellt. Über jeder Tafelmiete ist ein eigenes, verfahrbares Umschichtmobil 35 angeordnet, wobei die Querverfahrbarkeit gezeigt ist, welche notwendig ist, da sinnvollerweise sowohl Abbau wie Abwurf nur auf einem Bruchteil der Breite der Tafelmiete stattfindet.

Der Rotteplatz 1 weist ein Belüftungssystem 60 auf, welches Luft von der Bodenfläche her in die Tafelmiete einbläst. Bevorzugt wird die Länge der Tafelmiete in eine grössere Anzahl Felder a, b, c, d usw. unterteilt in welchem je eine gesteuerte Luftmenge zugeführt wird. Die Abluft wird über ein Abluftsystem 58 zur Reinigung durch einen an sich bekannten Abluftfilter 59 geführt.

## Patentansprüche

1. Kompostieranlage zur Herstellung von Kompost verschiedenen Reifegrades mittels mehrfachem Umschichten einer Tafelmiete (6, 7), mit einer gesteuerten Umschichteinheit (35), die über dem Rotteplatz (1) kranartig längs- und querverfahrbar ist, als Abbaueinrichtung von einer Abbaustelle fördernde, aufwärts arbeitende Abbaumittel (5, 8, 9, 10; 26; 26', 26'') und anschließend ein mittels einer Steuerung (29, 30) längsveränderbares, zu einer Abwurfstelle förderndes Fördersystem mit einem in Längsrichtung verschiebbaren Förderer (12; 25) aufweist, derart, daß die Distanz zwischen der Abbau- und der Abwurfstelle veränderbar ist,
dadurch **gekennzeichnet**,
daß das Fördersystem aus wenigstens zwei sich in Längsrichtung mehr oder weniger teleskopartig überlappenden Förderern (11, 12, 13; 21, 22, 25) besteht, wobei der Überlappungsgrad durch Längsverschiebung zumindest eines Förderers (12, 13; 25) veränderbar ist.

2. Kompostieranlage nach Anspruch 1,
dadurch **gekennzeichnet**,
daß der Steuerung für die Speicherung einer Mehrzahl von Programmen ein Prozeßrechner (29) zugeordnet ist, zur freien Wahl verschiedener Ablaufprogramme für den automatischen Betrieb der Rottenanlage, insbesondere zur Ausgleichung des Rottenschwundes.

3. Kompostieranlage nach Anspruch 1 oder 2,
dadurch **gekennzeichnet**,
daß das Fördersystem zwischen einer Länge Lmin bei maximaler Überlappung der Förderer (11, 12, 13; 21, 22, 25) und einer Länge Lmax bei minimaler Überlappung der Förderer (11, 12, 13; 21, 22, 25) entsprechend dem Abstand zwischen der Abbaustelle und der Abwurfstelle wählbar veränderbar ist, wobei das Verhältnis Lmin : Lmax 1 : 1,2 bis 1 : 3, vorzugsweise 1 : 1,5 bis 1 : 2,5 und besonders bevorzugt 1 : 2 beträgt.

4. Kompostieranlage nach einem der vorangehenden Ansprüche,
dadurch **gekennzeichnet**,
daß das Fördersystem zwei oder drei längsverschiebbare Horizontalförderer (11, 12, 13; 22, 25) enthält.

5. Kompostieranlage nach einem der vorangehenden Ansprüche,
dadurch **gekennzeichnet**,
daß zumindest einer der Förderer (21), vorzugsweise der erste, geneigt ist.

6. Kompostieranlage nach einem der vorangehenden Ansprüche,
dadurch **gekennzeichnet**,
daß zumindest einer der Förderer ein Reversierförderband (25) ist.

7. Kompostieranlage nach einem der vorangehenden Ansprüche,
dadurch **gekennzeichnet**,
daß die Rotten-Abbaueinrichtung als aufwärtsfördernder Kratzerförderer ausgebildet ist.

8. Kompostieranlage nach einem der vorangehenden Ansprüche,
dadurch **gekennzeichnet**,
daß die Rotten-Abbaueinrichtung als Becherförderer (5), insbesondere als nach aufwärts arbeitende Grab- und Fördereräder (26; 26', 26'') ausgebildet ist.

9. Kompostieranlage nach einem der vorangehenden Ansprüche,
dadurch **gekennzeichnet**,
daß die Rotten-Abbaueinrichtung als Doppelgrab- und -förderrad (26', 26'') ausgebildet ist und einen Schrägförderer (21) aufweist.

10. Kompostieranlage nach einem der vorangehenden Ansprüche,
dadurch **gekennzeichnet**,
daß im Bereich des Fördersystems ein Durchlaufwägesystem (22) für das Rottegut vorgesehen ist.

11. Kompostieranlage nach Anspruch 10,
dadurch **gekennzeichnet**,
daß das Durchlaufwägesystem als Bandwaage (22) ausgebildet ist.

12. Kompostieranlage nach einem der vorangehenden Ansprüche,
dadurch **gekennzeichnet**,
daß eine Wassergehaltsmeßeinrichtung sowie eine Flüssigkeitszuführeinrichtung (24) zur kontinuierlich gesteuerten Zugabe von Flüssigkeit, bevorzugt Wasser, zugeordnet ist.

13. Kompostieranlage nach Anspruch 2, 12 und 10 oder 11,
dadurch **gekennzeichnet**,
daß der Rotteplatz (1) in Felder (f, g, ..., k, m, ..., s) eingeteilt ist, und daß durch Auswertung des von dem Durchlaufwägesystem (22) gemessenen Rottegut-Durchsatzes, des von der Flüssigkeitszuführeinrichtung (24) sowie des in dem Prozeßrechner (29) vorgegebenen gewünschten Flüssigkeitsgehalts die Flüssigkeitszugabe für ein jeweiliges Rotte-Feld (f, g, ..., k, m, ..., s) steuerbar ist.

14. Kompostieranlage nach Anspruch 12 oder 13,
dadurch **gekennzeichnet**,
daß die Flüssigkeitszuführeinrichtung im Bereich der Abwurfstelle angeordnet ist.

15. Kompostieranlage nach einem der vorangehenden Ansprüche,
dadurch **gekennzeichnet**,
daß in einem Endbereich der Rottenanlage ein stationäres Querförderband als eine Abwurfstelle vorgesehen ist, die bezogen auf die Längsrichtung entsprechend konstant ist, wobei die Abbaustelle entsprechend dem Abbauvorgang wählbar ist.

16. Kompostieranlage nach einem der vorangehenden Ansprüche,
dadurch **gekennzeichnet**,
daß je eine Tafelmiete (6, 7) durch zwei Längswände (50) begrenzt ist, längs und zwischen denen die Rotten-Abbaueinrichtung (5, 8, 9, 10; 26; 26', 26'') mit dem längsveränderbaren Fördersystem (11, 12, 13; 21, 22, 25) als Umschichtmobil (35) kranartig nach einem vorwählbarem Programm längs- und querverfahrbar ist.

17. Kompostieranlage nach einem der vorangehenden Ansprüche,
dadurch **gekennzeichnet**,
daß der Boden der Rottenanlage in Längsrichtung mehrere Belüftungsfelder (60) mit je steuerbarer Luftzufuhr aufweist, die Rottenanlage eingehaust und die Abluft daraus über einen Biofilter (59) reinigbar ist.

18. Verwendung einer Kompostieranlage nach einem der vorhergehenden Ansprüche,
zur automatischen Herstellung von Kompost verschiedenen Reifegrades, wobei die Umschichtung und der Austrag des Kompostes kranartig über dem Rotteplatz erfolgt, wobei die Distanz zwischen Abbau- und Abwurfstelle innerhalb eines minimalen und maximalen Maßes gesteuert und dadurch der Rotteschwund kompensiert wird, wobei die Steuerung der Umschichtung und des Austrages automatisch unter Berücksichtigung von spezifischen Eigenheiten, wie z.B. Durchsatzleistung, Feuchtigkeit, Temperatur, und zyklischen Änderungen, wie beispielsweise Jahreszeit erfolgt, und wobei alternativ oder zusätzlich eine Steuerung vor Ort möglich ist.

19. Verwendung nach Anspruch 18,
wobei die Primärmiete (40) durch unabhängige mechanische Mittel (42) koordiniert mit Umschichtung und Austragung gesteuert wird.

## Claims

1. Composting apparatus for producing compost having different degrees of maturity by multiple rearrangement of a stack cake (6, 7), comprising a controlled rearranging unit (35) which can be longitudinally and transversely displaced in the manner of a crane above the compost location (1), which comprises as decomposition device a decomposition means (5, 8, 9, 10; 26; 26', 26'') which operates upwardly and supplies a decomposition site, and which comprises thereafter a conveyor system which has a longitudinally displaceable conveyer (12, 25) which leads to a discharge site and the length of which can be modified by means of a control (29, 30), in such a manner that the distance between the decomposition site and the discharge site can be modified,
**characterized** in that
the conveyor system comprises at least two conveyors (11, 12, 13; 21, 22, 25) which overlap each other more or less telescopically; such that the degree of overlapping can be modified by longitudinally displacing at least one conveyor (12, 13; 25).

2. Composting apparatus according to claim 1,
**characterized** in that
a computer (29) is assigned to the control for storing a plurality of programs, in order to freely select among different programs for automatic operation of the composting apparatus, in particular for the compensation of the volume reduction of the materials.

3. Composting apparatus according to either claim 1 or 2,
**characterized** in that
the conveyor system can be selectively varied between a minimum length Lmin in case of maximum overlapping of the conveyors (11, 12, 13; 21, 22, 25), and a maximum length Lmax in case of minimum overlapping of the conveyors (11, 12, 13; 21, 22, 25), in correspondence with the distance between the decomposition site and the discharge site, the ratio Lmin:Lmax being from 1:1.2 to 1:3, preferably 1:1.5 to 1:2.5 and more preferably 1:2.

4. Composting apparatus according to any one of the preceding claims,
**characterized** in that
the conveyor system comprises two or three horizontal conveyors (11, 12, 13; 22, 25) which are displaceable in the longitudinal direction.

5. Composting apparatus according to any one of the preceding claims,
**characterized** in that
at least one of the conveyors (21), preferably the first conveyor, is inclined.

6. Composting apparatus according to any one of the preceding claims,
**characterized** in that
at least one of the conveyors is a reversible conveyor belt (25).

7. Composting apparatus according to any one of the preceding claims,
**characterized** in that
the decomposition device is realized as a scraping conveyor which progresses upwardly.

8. Composting apparatus according to any one of the preceding claims,
**characterized** in that
the decomposition device is realized as a bucket conveyor (5), in particular in the manner of upwardly acting digger and conveyor wheels (26; 26', 26'').

9. Composting apparatus according to any one of the preceding claims,
**characterized** in that
the decomposition device is realized as a double digger and conveyor wheel (26', 26'') and comprises an inclined conveyor (21).

10. Composting apparatus according to any one of the preceding claims,
**characterized** in that
a continuous weighing system (22) is provided for the materials to be composted, in the region of the conveying system.

11. Composting apparatus according to claim 10,
**characterized** in that
the continuous weighing system is realized as a belt balance (22).

12. Composting apparatus according to any one of the preceding claims,
**characterized** in that
a water content measuring device and a liquid supply device (24) are arranged for continuously controlled addition of liquid, preferably water.

13. Composting apparatus according to one of the claims 2, 12 and 10 or 11,
**characterized** in that
the composting site (1) is divided into areas (f, g, ..., k, m, ..., s), and in that the addition of liquid for a respective composting area (f, g, ..., k, m, ..., s) is controllable by the evaluation of the throughput of the compost material and measured by the continuous weighing system (22), of the desired liquid concentration for the liquid supply device (24), as well as of the desired water concentration pregiven in the computer (29).

14. Composting apparatus according to either one of the claims 12 or 13,
**characterized** in that
the liquid supply device is provided in the region of the discharge site.

15. Composting apparatus according to any one of the preceding claims,
**characterized** in that
a stationary transverse conveyor belt, which is correspondingly constant with respect to the longitudinal direction, is provided as a discharge site in an end region of the composting apparatus, and the decomposition site is selectable corresponding to the decomposition process.

16. Composting apparatus according to any one of the preceding claims,
**characterized** in that
each stack cake (6, 7) is bounded by two longitudinal walls (50), along which and between which the decomposition device (5, 8, 9, 10; 26', 26'') with the conveyor system of variable length (11, 12, 13; 21, 22, 25) is longitudinally and transversely displaceable as a movable rearrangement unit, in the manner of a crane, according to a preselectable program.

17. Composting apparatus according to any one of the preceding claims,
**characterized** in that
the floor of the composting device has several ventilation areas (60) in the longitudinal direction, each having a controllable air intake; in that the composting apparatus is enclosed; and in that the air released therefrom can be cleaned by means of a biofilter (59).

18. Use of a composting apparatus according to any one of the preceding claims for the automatic preparation of compost having different degrees of maturity, in which the rearrangement and the discharge of the compost are carried out by a crane-like means above the compost site, the distance between the decomposition site and the discharge site is controlled between a maximum dimension and a minimum dimension in order to compensate for the volume reduction, control of the rearrangement and the discharge being carried out under consideration of specific characteristics, such as for example throughput capacity, moisture, temperature, and cyclic changes, such as for example the time of the year, and wherein alternatively or additionally a local control is possible.

19. Use according to claim 18, wherein the primary cake (40) is controlled by independent mechanic means (42), coordinated with the rearrangement and the discharge.

## Revendications

1. Appareil de compostage pour fabriquer du compost avec différents degrés de maturité en retournant plusieurs fois un tas plat (6, 7) avec un dispositif commandé de retournement (35), qui est déplaçable à la manière d'une grue ou d'un chariot en sens longitudinal et en sens transversal au-dessus du site de compostage (1), qui comprend comme dispositif de décomposition des moyens de décomposition (5, 8, 9, 10; 26; 26', 26'') qui travaillent en montant et alimentent un site de décomposition, et qui comprend ensuite un système de transport avec un transporteur (12; 25) déplaçable en direction longitudinale qui peut modifié en longueur au moyen d'une commande (29, 30) et mène à un site de déchargement, de telle manière que la distance entre le site de décomposition et le site de déchargement peut être changée, caractérisé en ce que le système de transport se compose d'au moins deux transporteurs (11, 12, 13; 21, 22, 25) se recouvrant de manière plus ou moins télescopique, le degré de recouvrement pouvant être changé en déplaçant au moins un transporteur (12, 13; 25) en sens longitudinal.

2. Appareil de compostage selon la revendication 1, caractérisé en ce qu'il est prévu pour la commande un ordinateur de procédé (29) afin de stocker une pluralité de programmes, pour choisir librement parmi différents programmes de déroulement pour l'exploitation automatique de l'appareil de compostage, en particulier pour compenser la diminution de volume des matières.

3. Appareil de compostage selon l'une ou l'autre des revendications 1 et 2, caractérisé en ce que le système de transport peut être varié au choix entre une longueur Lmin en cas de recouvrement maximal des transporteurs (11, 12, 13; 21, 22, 25) et une longueur Lmax en cas de recouvrement minimal des transporteurs (11, 12, 13; 21, 22, 25), en correspondance avec la distance entre le site de décomposition et le site de déchargement, le rapport Lmin:Lmax étant de 1:1,2 à 1:3, de préférence 1:1,5 à 1:2,5, et de préférence particulière 1:2.

4. Appareil de compostage selon l'une quelconque des revendications précédentes, caractérisé en ce que le système de transport comporte deux ou trois transporteurs horizontaux (11, 12, 13; 22, 25) déplaçables en sens longitudinal.

5. Appareil de compostage selon l'une quelconque des revendications précédentes, caractérisé en ce qu'au moins un des transporteurs (21), de préférence le premier, est incliné.

6. Appareil de compostage selon l'une quelconque des revendications précédentes, caractérisé en ce qu'au moins un des transporteurs est une bande transporteuse réversible (25).

7. Appareil de compostage selon l'une quelconque des revendications précédentes, caractérisé en ce que le dispositif de décomposition est réalisé comme un transporteur à racloirs qui avance en montant.

8. Appareil de compostage selon l'une quelconque des revendications précédentes, caractérisé en ce que le dispositif de décomposition est réalisé en tant que transporteur à godets (5), en particulier à la manière de roues excavatrices et transporteuses (26; 26', 26'') agissant vers le haut.

9. Appareil de compostage selon l'une quelconque des revendications précédentes, caractérisé en ce que le dispositif de décomposition est réalisé comme une double roue excavatrice et transporteuse (26', 26'') et présente un transporteur oblique (21).

10. Appareil de compostage selon l'une quelconque des revendications précédentes, caractérisé en ce qu'il est prévu, dans la zone du système de transport, un système de pesage en continu (22) pour la matière à composter.

11. Appareil de compostage selon la revendication 10, caractérisé en ce que le système de pesage en continu est réalisé comme une bascule-courroie (22).

12. Appareil de compostage selon l'une quelconque des revendications précédentes, caractérisé en ce qu'on prévoit un dispositif de mesure de la teneur en eau, ainsi qu'un dispositif d'amenée de liquide (24) pour l'addition commandée en continu de liquide, de préférence de l'eau.

13. Appareil de compostage selon l'une des revendications 2, 12 et 10 ou 11, caractérisé en ce que le site de compostage (1) est divisé en zones (f, g, ..., k, m, ..., s), et que l'addition de liquide pour une zone de compostage respective (f, g, ..., k, m, ..., s) peut être commandée par évaluation du débit de passage de la matière à composter, mesuré par le système de pesage en continu (22), de la teneur en liquide désirée pour le dispositif d'amenée de liquide (24), ainsi que de la teneur en eau prédéterminée dans l'ordinateur (29).

14. Appareil de compostage selon l'une ou l'autre des revendications 12 et 13, caractérisé en ce que le dispositif d'amenée de liquide est prévu dans la zone du site de déchargement.

15. Appareil de compostage selon l'une quelconque des revendications précédentes, caractérisé en ce qu'il est prévu dans une zone extrême du dispositif de compostage, comme site de déchargement, une courroie transporteuse transversale et stationnaire, constante de manière correspondante par rapport à la direction longitudinale, le site de décomposition pouvant être choisi en correspondance du processus de décomposition.

16. Appareil de compostage selon l'une quelconque des revendications précédentes, caractérisé en ce que chaque tas plat (6, 7) est délimité par deux parois longitudinales (50), le long desquelles et entre lesquelles le dispositif de décomposition de matières (5, 8, 9, 10; 26', 26'') peut être déplacé, avec le système de transport à longueur variable (11, 12, 13; 21, 22, 25), en sens longitudinal et en sens transversal en tant qu'unité mobile de retournement, à la manière d'une grue, suivant un programme qui peut être présélectionné.

17. Appareil de compostage selon l'une quelconque des revendications précédentes, caractérisé en ce que le fond du dispositif de compostage présente en sens longitudinal plusieurs zones de ventilation (60) dotées chacune d'une amenée d'air qui peut être commandée, en ce que l'appareil de compostage est enfermé, et en ce que l'air qui en est évacué peut être nettoyé au moyen d'un filtre biologique (59).

18. Utilisation d'un appareil de compostage selon l'une des revendications précédentes, pour la fabrication automatique de compost de différents degrés de maturité, dans laquelle le retournement et l'évacuation du compost ont lieu par un moyen du genre grue au-dessus du site de compostage, la distance entre le site de décomposition et le site de déversement est commandée entre une dimension maximale et une dimension minimale, de manière à compenser la diminution de volume, la commande du retournement et de l'évacuation ayant lieu en tenant compte de caractéristiques spécifiques comme par exemple la capacité, l'humidité, la température et les changements cycliques, comme par exemple la saison, et dans laquelle une commande locale est possible, en variante ou en supplément.

19. Utilisation selon la revendication 18, dans laquelle le tas primaire (40) est commandé par des moyens mécaniques indépendants (42), en coordination avec le retournement et l'évacuation.
